# EUROPEAN PATENT APPLICATION

(11) **EP 0 575 648 A1**
(43) Date of publication of application: **29.12.1993**
(21) Application number: 92110509.4
(22) Date of filing: 22.06.1992
(51) Int. Cl.: C08L 83/04, C08K 3/04, C08K 3/40

(54) **A pressure medium for a closed hydraulically functioning apparatus**

(71) Applicant: UNICRAFT OY, SF-00210 Helsinki (FI)
(72) Inventor: Rinne, Erkki, SF-02260 Espoo (FI)
(74) Representative: Zipse + Habersack

(57) **Abstract**

The present invention is related to an improved pressure medium for a closed hydraulic apparatus and materials for pressurizing an apparatus, wherein the improved pressure medium comprises silicone compounds mixed with graphite and/or glass powder in order to lower thermal expansion and compressibility and/or to improve flowability of a silicone based pressure medium. The invention is also related to an improved pressure medium for a closed hydraulic apparatus wherein the improved pressure medium comprises a mixture of a silicone fluid (dimethyl polysiloxane) and a room temperature vulcanizing (RTV) silicone rubber.

## Description

This invention relates to a new and useful pressure medium for hydraulically functioning tools and apparatuses, such as chucks, workpiece-holders or mechanical seals. The new pressure medium is essentially meant for purposes where thermal expansion of hydraulic fluid causes excessive pressure or where high compressibility causes long piston movements.

It is commonly known in the prior art that there are many hydraulic holding chucks and seals on the market, as the number of prior art publications shows. The use of elastic rubber as a pressure medium is known, e.g. from the US patents Nos. 3,471,156; 1,590,580; 1,914,741; 2,246,600; 2,306,160; 2,485,497; 2,536,898; 3,400,937; 3,360,273; 3,497,226; 3,259,020; 2,826,420; 2,652,749; 2,324,225; and 2,911,222 as well as from the EP publications Nos. 0 261 293 and 0 272 730 and from DE patent publication Nos. 1 170 607 and 1 246 359 and from the UK publication 2 007 550 A. The prior art publications are related to solutions where rubber is used as a pressure medium but none of the solutions put forth in these publications can be used as a hydraulic oil replacing pressure medium (pressure fluid), because of small channels used in hydraulic arbors and chucks. The prior art solutions are also explaining the shortcomings of hydraulically functioning chucks and packing.

In order to avoid oil leaks and the use of expensive seal designs the applicant has proposed in his earlier PCT patent applications WO 90/10809 and WO 90/10796 and in his FI patent Nos. 81186 and 81180, the subject matter of which is incorporated herein by reference, that a hydraulic oil is replaced by an elastomer pressure medium (two-component silicone) which has been arranged to stay out of contact with the walls of pressure medium space and pressure channels acting as a hydraulic pressure medium. This solution has proved to be successful in many cases.

However, the silicone pressure medium as such and hydraulic oils have as a drawback high thermal expansion, which can cause excessive pressure rise in an apparatus using such pressure medium. Another drawback is high compressibility, which can cause too long movement of the piston used to pressurize said pressure medium. The thermal expansion causes e.g. in hydraulic oil 70 bar/10°C pressure rise, which means that the pressure rise is so high, that said apparatus would break if temperature rise is 150°C, or if said apparatus is provided with temperature compensating means, e.g. a spring loaded piston, the movement of the piston and springs would be too long to be useful in existing equipment. Still another drawback when using hydraulic oil is that under the great pressure leaks are very common.

Accordingly, it is an object of this invention to avoid the aforementioned drawbacks and to provide an improved pressure medium for closed hydraulically functioning apparatuses. Therefore one important aspect of the present invention is to avoid oil leaks and the use of expensive seal designs and to achieve a new pressure medium which is useful where wide temperature range is required.

The new pressure medium according to the invention is characterized by what is presented in the characterization part of the claims.

The main advantages of the invention include a reduction of the thermal expansion, a reduction of compressibility of the silicone compound and a possibility to avoid leaks of the hydraulic fluid used. Also the flowability of the compound improves.

In the following, the invention is described in detail by the aid of examples by referring to the accompanying drawings. It should be noted that the drawings and subsequent descriptions thereof are only illustrative and should not be taken as limitations on the claims. In the drawings
- Fig. 1: is a prior art diagram of volume increase in a hydraulic oil as a function of temperature increase.
- Fig. 2: is a prior art diagram of compressibility of two different silicone fluids and a mineral oil as a function of pressure.
- Figs. 3 and 4: are diagrams of compressibility of two different pressure mediums according to the present invention.
- Fig. 5: is a diagram showing compressive force needed to compress a test piece of the present invention having a diameter of 20 mm and a length of 20 mm through nozzle orifices of different sizes being 20 mm in length and having diameters of 2, 4 or 6 mm.

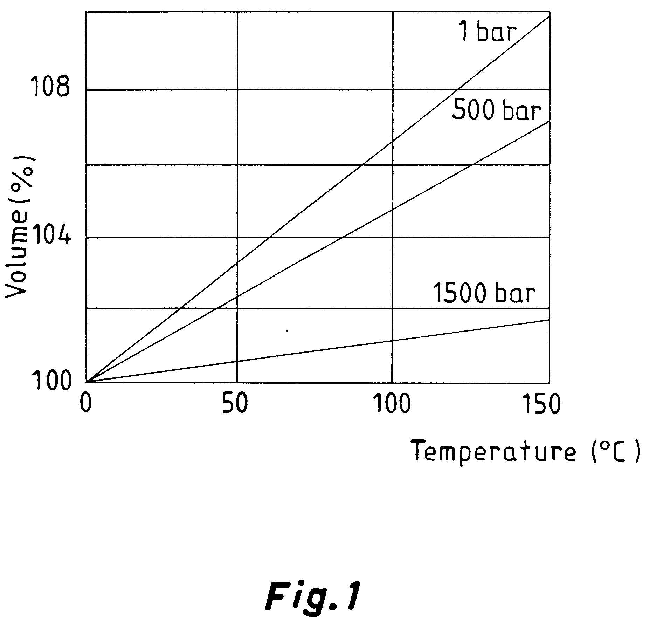

In mineral oils the thermal expansion is relatively high, as shown in fig. 1, which means that the pressure increase in closed systems is often too high requiring design provisions to avoid excessive pressure rise. In the figure the inclined line "1 bar" indicates the increase of the volume of a certain mineral oil as a function of temperature when the volume can freely increase. Thus the space for the oil is not closed. For example the volume increase in a free space with the oil in question is about 6.6% (106.6) when the temperature increases 100°C. If the space for the oil is limited in this particular case so that with 100°C temperature increase the volume of the oil can increase only about 4.6% the pressure increases 500 bar. The lowest line "1500 bar" indicates the situation where the possibility of volume increase is still more limited.

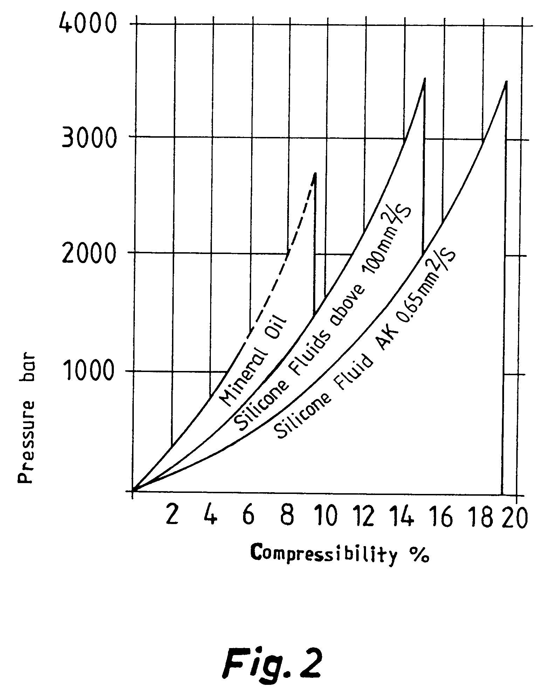

The compressibility of silicone fluids is higher than that of mineral oils, as clearly shown in figure 2. For example with a mineral oil 100°C increase of temperature corresponds about 5% increase of volume but in a closed space this causes the pressure of 1000 bar. Correspondingly with a silicone 100°C temperature increase tends to cause 10% increase of volume which in a closed space causes the same pressure of 1000 bar.

Briefly stated, the invention relates to a new pressure medium for a closed hydraulic apparatus, wherein the pressure medium comprises silicone compounds mixed with graphite and/or glasspowder for reducing the coefficient of thermal expansion. According to one aspect of the present invention the new improved pressure medium comprises a silicone mixture including an RTV silicone rubber (room temperature vulcanizing silicone) and a silicone fluid (dimethyl polysiloxane).

Fundamental concept of the invention is to use fillers, such as graphite and/or glass powder in silicone compounds and still remain flowability in wide temperature range. The study of silicone compounds show clearly that the thermal expansion and compressibility is reduced 20-30 % in glass and graphite powder filled silicone elastomers and silicone fluids.

The silicone compound used can comprise only a room temperature vulcanizing (RTV) silicone rubber or a mixture of a RTV silicone rubber and a silicone fluid (dimethyl polysiloxane). In case of the mixture the pressure medium comprises a mixture of silicone compounds including 10-30 % by weight of a silicone fluid and 90-70 % by weight of an RTV silicone rubber. RTV silicone vulcanizes at room temperature in a certain time but it can vulcanized faster at higher temperatures. Later in the description both the abovementioned alternatives are referred as silicone compound.

As mentioned earlier the silicon compound can be filled with graphite powder or glass powder or with a mixture of the both of them. Later in the description all the abovementioned alternatives are referred as filling material. For many various applications the suitable mixing ratio is in the range from 10 to 60 % by weight of the filling material. In case of the use of the both powders the pressure medium comprises the silicone compound mixed with 10-60 % by weight of graphite powder and 30-10 % by weight of glass powder.

One way of producing the pressure medium is to use the silicone fluid (dimethyl polysiloxane) only mixed with graphite powder. Also this kind of compound is sufficiently flowable.

Further there is more than one way to fill the pressure chamber with the silicone compound mixed with the filling material. This mixture is called the pressure medium. One way is to mix the filling material into the silicone compound and then cast the produced pressure medium into the pressure chamber, close the pressure chamber and vulcanize the pressure medium either at room temperature or at higher temperature.

Another way is to mix the filling material into the silicone compound and then cast the produced pressure medium into a mold and vulcanize the pressure medium either at room temperature or at higher temperature. Only thereafter the pressure medium is compressed into the pressure chamber.

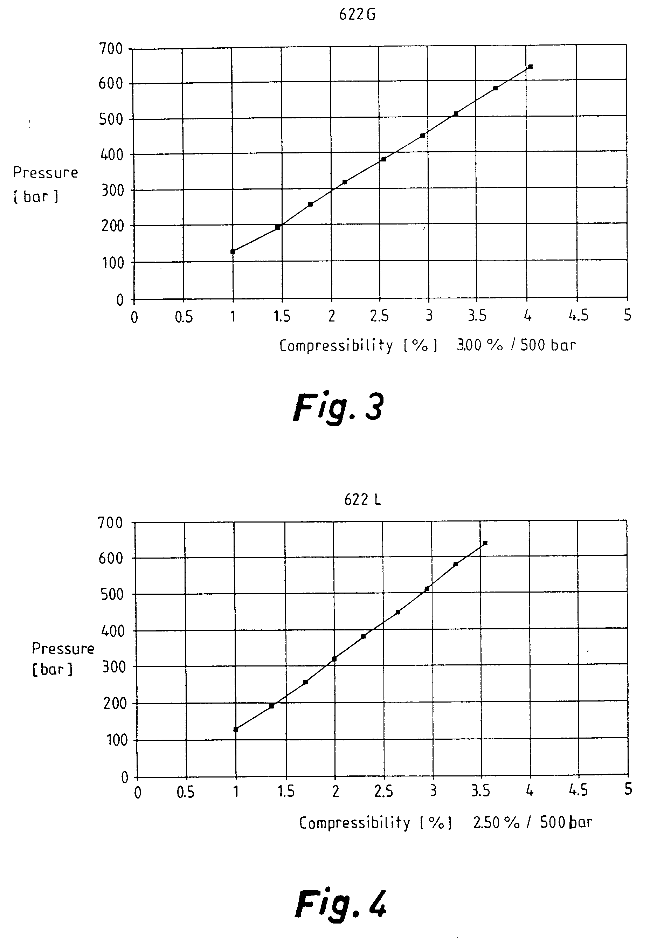

In figures 3 and 4 are shown compressibility of two different pressure mediums manufactured according to the teaching of the present invention. The pressure medium of fig. 3, (622G) comprises 55 % by weight of RTV silicone rubber and 45 % by weight of graphite powder. The pressure medium of fig. 4, (622L) comprises 40 % by weight of RTV silicone rubber, 10 % by weight of silicone fluid (dimethyl polysiloxane) and 50 % by weight of glass powder.

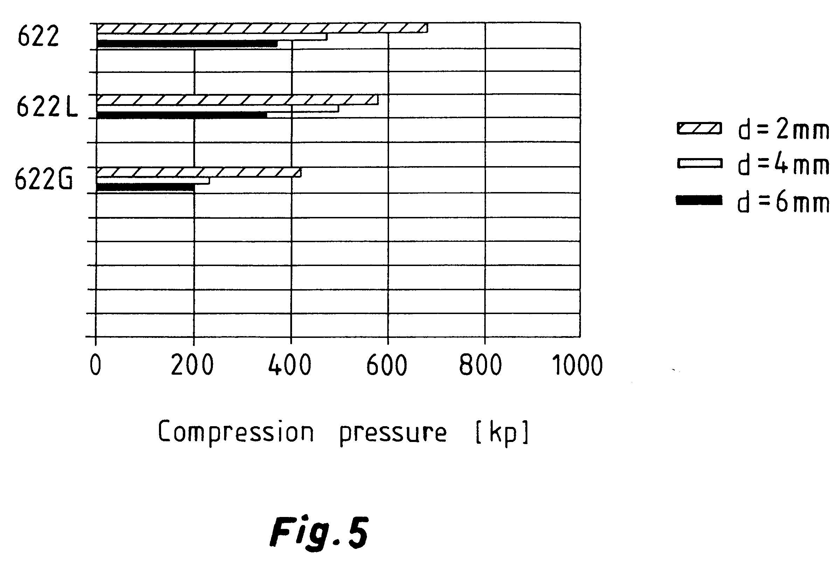

The rheology of the pressure medium according to the present invention was studied by using cylindrical test pieces having diameter of 20 mm and length of 20 mm. The test pieces were compressed through different size nozzle orifices being 20 mm in length and having diameters 2 mm, 4 mm or 6mm. The force needed to compress test pieces through the different orifices were measured and the results are shown in fig. 5. In fig. 5 the material indicated by 622 comprises 100 by weight of RTV silicone rubber. The addition of graphite powder and/or glass powder to the silicone compounds reduced the needed compression force compared to the pure silicone compound (622), as is clearly shown in figure 5.

In order that an apparatus using the pressure medium of the present invention will work properly a returning spring force should be in balance with the force needed to compress the pressure medium through small channels whereby only a small movement of a piston used to compress the pressure medium is needed to cause the apparatus to perform its function. That is why the reduction of the compressive force is also one advantage of the new pressure medium according to the invention.

For the metering, mixing and transfer of the two-component silicone there are machines on the market, which machines can be used for molding the pressure medium. Curing of the compound can take place at room temperature or at higher temperature, which greatly reduces the required curing time.

Cured rubber having for example mixing ratio of 50 % graphite powder and 50 % silicone compounds, all percentages by weight, is compressed into a pressure chamber.

For the compressing of the pressure medium through a small hole e.g. a hydraulic piston can be used. Large batches of silicone and additives are best mixed with a mechanical stirrer, but kneadable compounds can be mixed by hand.

Air free pressure medium is easily achieved with filling apparatus when air escapes from a threaded hole provided in the pressure chamber which hole is closed after the pressure chamber is full of pressure medium.

Addition of graphite powder lessen the thermal expansion, compressibility and shore hardness. The use is advantageous when high pressure and temperature range is needed. Graphite addition is possible in weight ratio 50/50 % and silicone compound remains soft and flowable.

Addition of glass-powder in silicone lessen considerably thermal expansion whereas an addition of a silicone fluid increases compressibility and thermal expansion, increasing also flowability.

It should be noted that one advantage of using graphite and/or glass additives is the fact that they are chemically inert.

Addition of glass and graphite powder lessen considerably thermal expansion in silicone rubber and rubber is still soft and flowable. One test mixture was made in weight ratio 30/30/40 %.

It will be appreciated that the invention is susceptible to modifications and change without departing from the scope of the subjoined claims.

## Claims

1. A pressure medium for a closed hydraulically functioning apparatus having a pressure chamber for said pressure medium, wherein the pressure medium comprises one or more silicone compounds, **characterized** in that the silicone compound is mixed with filling material and thereafter filled into the pressure chamber.

2. The pressure medium according to claim 1, **characterized** in that the pressure medium comprises a silicone compound mixed with 10-60 % by weight of graphite powder and thereafter filled into the pressure chamber.

3. The pressure medium according to claim 1, **characterized** in that the pressure medium comprises a silicone compound mixed with 10-60 % by weight of glass powder and thereafter filled into the pressure chamber.

4. The pressure medium according to claim 1, **characterized** in that the pressure medium comprises a silicone compound mixed with 10-60 % by weight of graphite powder and 30-10 % by weight of glass powder and thereafter filled into the pressure chamber.

5. The pressure medium according to any one of the previous claims, **characterized** in that pressure medium comprises at least a room temperature vulcanizing (RTV) silicone rubber.

6. The pressure medium according to any one of the previous claims, **characterized** in that the pressure medium comprises a room temperature vulcanizing (RTV) silicone rubber and a silicone fluid (dimethyl polysiloxane).

7. The pressure medium according to any one of the previous claims, **characterized** in that the pressure medium comprises a silicone compound having 10-30 % by weight of a silicone fluid and 90-70 % by weight of an RTV silicone rubber.

8. The pressure medium according to any one of the previous claims, **characterized** in that after mixing the silicone compound the mixture is cast and cured into the pressure chamber.

9. The pressure medium according to any one of the previous claims 1-7, **characterized** in that after mixing the silicone compound the mixture is first cast and cured in a mold and thereafter compressed into the pressure chamber.
